# EUROPEAN PATENT APPLICATION

(11) **EP 2 008 556 A1**
(43) Date of publication of application: **31.12.2008**
(21) Application number: 07012630.5
(22) Date of filing: 28.06.2007
(51) Int. Cl.: A47J 37/12

(54) **Cooking unit**

(71) Applicant: Bayir, Huseyin, 221 Ildertom Road London SE15 1NS (GB)
(72) Inventor: Bayir, Huseyin, 221 Ildertom Road London SE15 1NS (GB)
(74) Representative: Wright, Howard Hugh Burnby

(57) **Abstract**

A cooking disc fig. 1 includes attachment of upper lid (1), base (.2), locking system (3) to confine a steak of meat inside the unit and releases the pressure from the steam release holes (14) which is controlled by means of steam flaps (13) which holding the steam and flavor in the food and saves time and energy as the unit facilitates to cook in the oil, but isolated from the oil. in oven and in the fire.

## Description

This invention relates to food, such as burgers or steaks, been confined in a disc to be cooked inside the oil while the burger is isolated from the oil and retains its flavour in the burger.

When the food cooks on the griddle or on a grill it always takes more time to cook both sides because it must be turned over. When the food is facing the heat it will of course release some of the steam and flavour. The same problem consists when cooking on the griddle. Some other so called contact griddles cook both sides at the same time, which is faster. For example, when cooking a burger, in those contact griddles the cook is not able to cook any additional ingredients, such as onions, at the same time and speed, also contact griddles makes the burger dry, which is substantial flavour for the burger.

The invention provides to cook onions and the burgers together and during cooking process onion(28) and the burger exchanges the flavour. The device gives facility to cook in the oil together with chips therefore saves time, energy and labour as the invention provides chips and the burger in one oil pan rather than cooking on a separate griddle.

The invention provides the burger and the onions confine in a geometric box and housing the food and isolates from the environment and enables to cook inside the hot oil. By means of the heat of the oil the burger in the unit starts cooking from both sides. By means of Steam release holes which is a piercing on the body of the unit enables the steam comes out from the unit not to build pressure inside the unit. By means of the steam flaps which is blocking steam release holes not the oil to leak in. Also by means of the rate of the steam flap, as it is a beam spring, the unit holds an amount steam and flavour inside the unit and in the food. The locking system locks the unit tight to conceal it from the environment. Preferably for safety reasons, the locking system is made of number of springs which enables to release the high pressure in case it builds up.

Preferably a wire rack can be inside the unit to dispatch the food from the inner surface of the unit and the wire rack can be with legs or without. The wire rack with legs provides more space for steam but the food cooks slow. Preferably the invention can be flat or waved shaped. The shape that is flat, the invention cooks the food equal all over the surfaces. When the shape that is waved material the invention provides space for steam between the waves which is lower part, also well cooked lines on the food by means of the part of the waves which are raised. The thickness of the material of the invention effects the speed of the cooking. The shape that the material is thin the unit cooks faster.

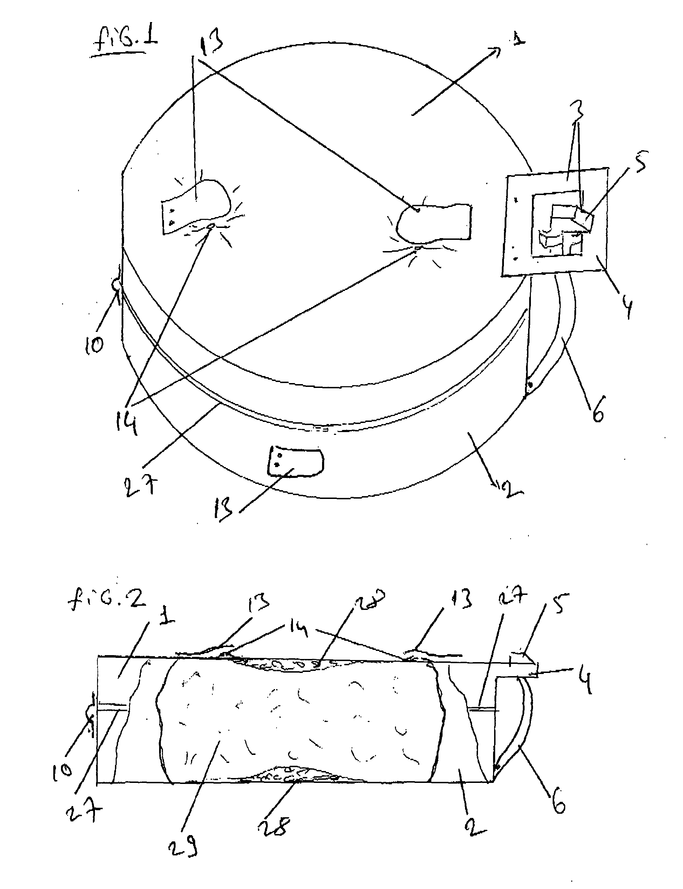

The Cooking Disc, fig.1, is constructed of base (2), upper lid (1) and a locking system (3). For the pressure fryer safety requirements on base, upper lid (1) and on the sides there are one or more than one steam release holes and associated steam flaps (13). Steam flaps made of preferably beam springs which are blocking the steam release holes (14) thus holds the flavour and steam inside the unit, as well as prevents the oil leaking into the unit. In fig.1 illustrates steam flaps above steam release holes preferably associated out of surface of the unit and they have a beam spring flexibility or any other supporting spring.

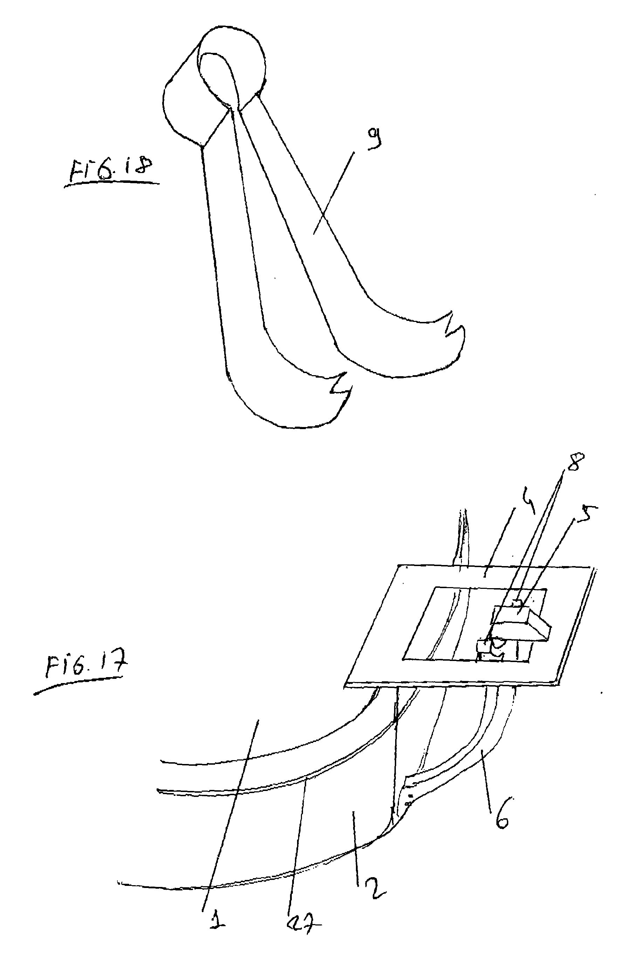

Steam flaps (13) are above the steam release holes and blocking the steam release holes and big enough plates to cover the steam release holes and underneath of the steam flaps can be a rubber layer to well seal the steam holes. Steam flaps are kind of beam springs or any other kind of spring to hold the steam flaps on the holes and the rate of the beam spring is convenient to the resistance of the unit against pressure derived from the contents cooking. Also prevents the danger of the steam(12) jetting out through the steam release holes. The rate of the steam flaps is relatively smaller than the rate of the beam spring frame (4), fig. 1 and fig.17, which is the flexibility of the locking system.

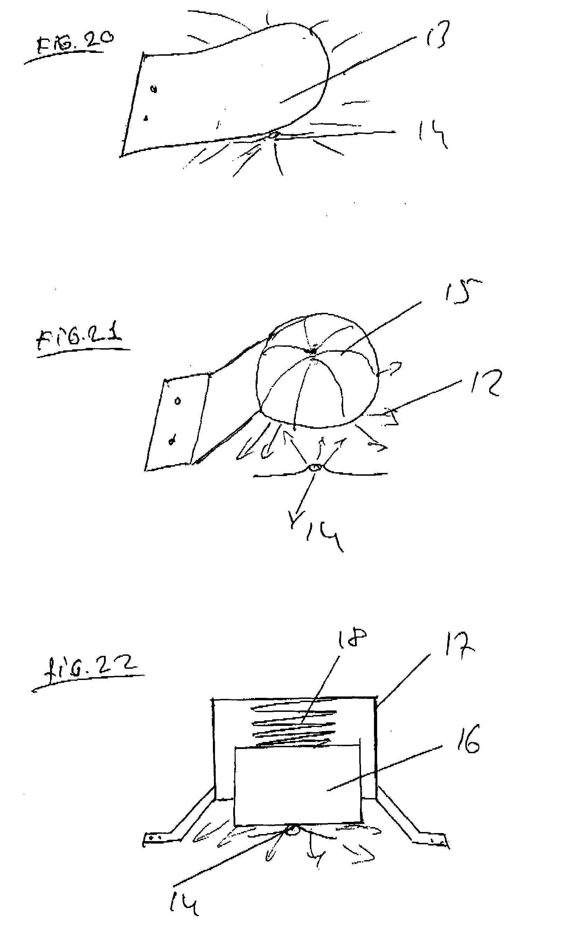

Also the steam flaps can be in the shape like a piston, fig.22 which is supported by preferably a helical compression spring, inside a protective cover and above a steam release hole to hold. The protective cover is mounted with the legs on the unit it protects the piston in case a weight exerts on to piston. The helical compression spring is a having pressure on the piston to hold a certain amount of steam inside the unit and the rate of the helical compression spring is smaller than the beam frame spring of locking system. Fig.22, illustrates magnified view of the inside the piston flap.

The unit made of metal or any other heat resistant materials. The unit is also in a shape that the diameters of the upper lid (1) and the base, fig.1, fig.5 and fig.7, are the same. To hold more steam within the unit and to prevent the oil leaking into the unit while cooking in the oil, the lips of the base and the skirt of the lid are well sealed such as using a rubber band (27), although the rubber band is not necessarily needed. Also a rubber layer can be associated underneath the steam flaps (13) to hold more of the steam.

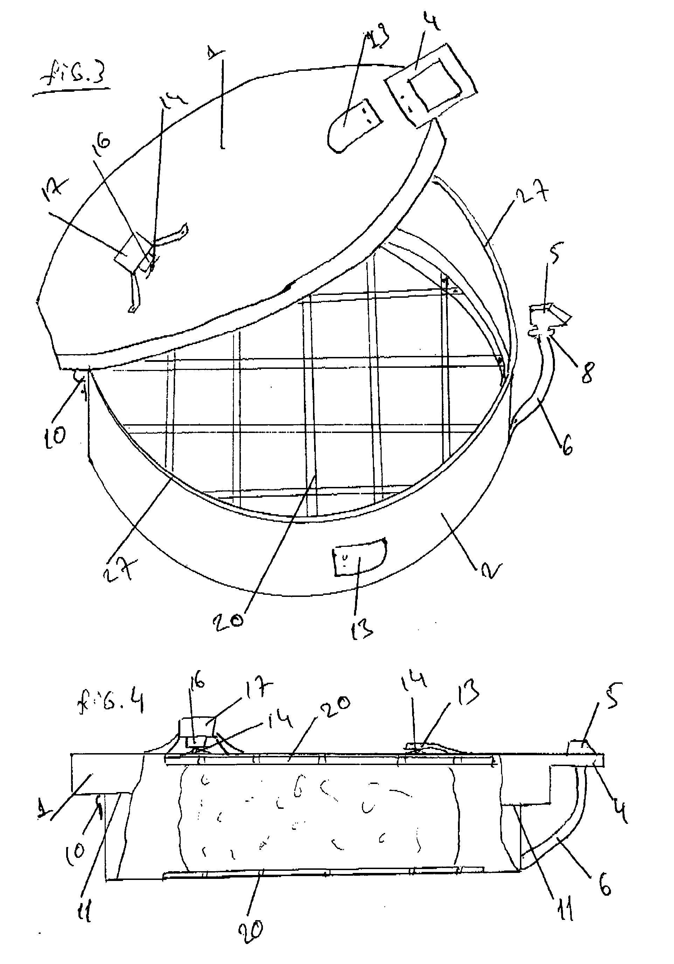

Also the unit is in a shape that the inner diameter of the big upper lid is relatively bigger than the outer diameter of the base. This provides a gap between the skirt of the upper lid and the lips of the base fig.3, fig.4, fig.9, fig 11. When the upper lid releases the excessive pressure by means of beam spring of the locking system upper lid skirt (11) prevents danger derived from the steam.

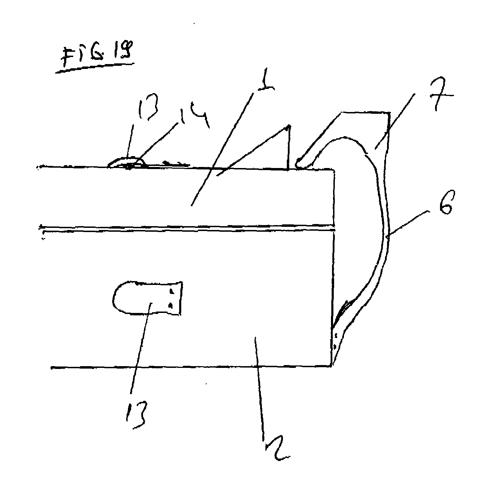

Locking system is constructed of number of springs and facilitates flexibility to the lid for a excessive pressure to escape and associates with the upper lid and base to keep the unit locked and tight and it is constructed of slanted hook(5), beam bar,(6) beam spring frame(4) and unlocking supporting arm (8). Fig.17. The unit gets closed by pushing down the beam spring frame on to the slanted hook and as the head of the beam spring hook is slanted it clicks in. by means of the beam spring frame in case the unit builds up high pressure gives flexibility to the upper lid to move up and provides a gap between the base and the upper lid to escape excessive pressure. Beam bar of slanted hook provides a continuous locking. Beam bar is mounted on the base is a kind of a spring such as helical expanding spring or curved beam spring which activates when a high pressure builds up and when the unit is locking and unlocking. Preferably a locking system can be in a shape of a claw hook(7), fig.19, mounted on the base with a beam bar(6) and a having a slanted hook underneath the slanted hook(5) is a curved cut out in a case a high pressure pushes up the lid and the hook will not release the lid but a small gap for exit of the steam and beam bar is a kind of spring such as beam spring or helical expanding spring. To unlock the claw hook by simply pushing the hook away or preferably there can be a raised corner close to the claw hook facilitates an easy pushing away the hook by placing a thick probe in between.

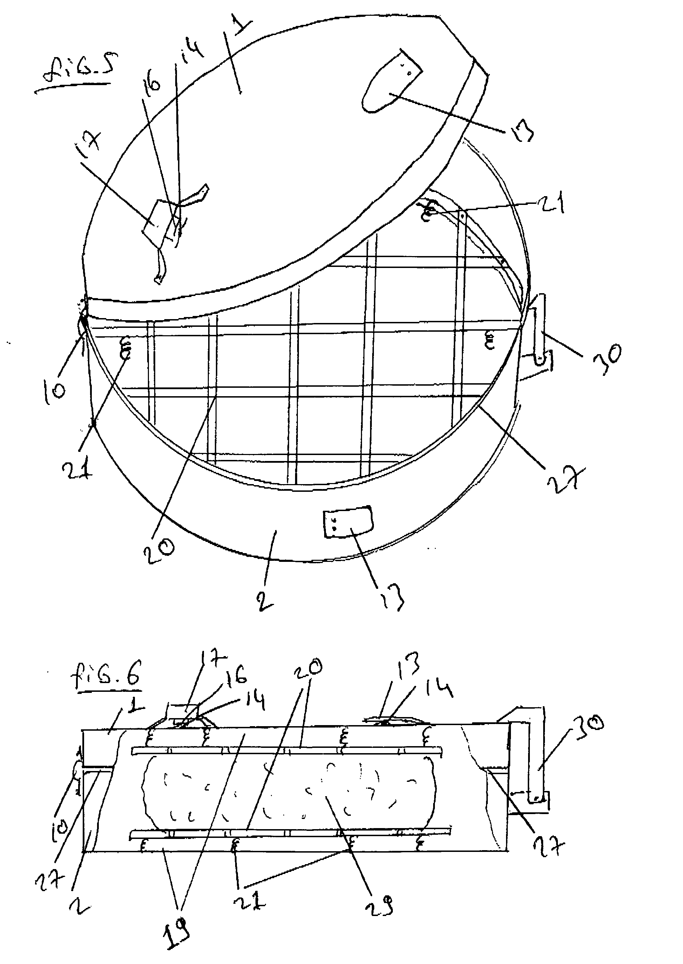

By means of the flexibility of the beam spring frame, the locking system brings the upper lid and base locked tightly. The head of the slanted hook (5) is relatively lower than the beam spring frame so that the unit can be locked tight. The slanted hook is positioned very close to the beam spring frame by means of the rate of the beam bar the system keeps the unit locked. In case a high pressure builds up in the unit, by means of the flexibility of the beam spring frame (4) the upper lid will move up and release the excessive pressure from the unit. Preferably rather then a flexible locking system also locking system can be solid with a solid hook(30) mounted on the base and locking the lid tight, where the steam release holes, stem release flaps, steam pistons and protective cover are reliant to allow the excessive steam escape for safety reason. Fig.5, Fig,6.

Slotted tongs (9), Fig.18, is used to handle the food and the unit when the unit is hot and slotted tongs constructed of two arms and the V shaped which having a flexibility of beam springs or any other kind springs. Slotted tongs is also used to lock and unlock the unit. To lock the unit the beam spring frame is pushed down by means of slotted blade till the spring frame clicks in to the slanted hook (5). To unlock the unit using the slotted tongs each blade of the slotted tongs can be placed on each side of the slanted hook and pushing down the handle of the slotted tong while getting sported from the unlocking sporting arm (8) it will separate the hook from the lock and release the lock. Keeping the slotted blade on beam spring frame (4) and pulling up the upper lid to the end to open the unit fully. The hinges (10) connecting the upper lid (1) and the base (2) are sported by helical torsion springs which helps to opening of the unit. The upper lid also can be free to remove to separate from the base. Also the upper lid is free from the base without a hinge and it can be locked by twisting or clicking in.

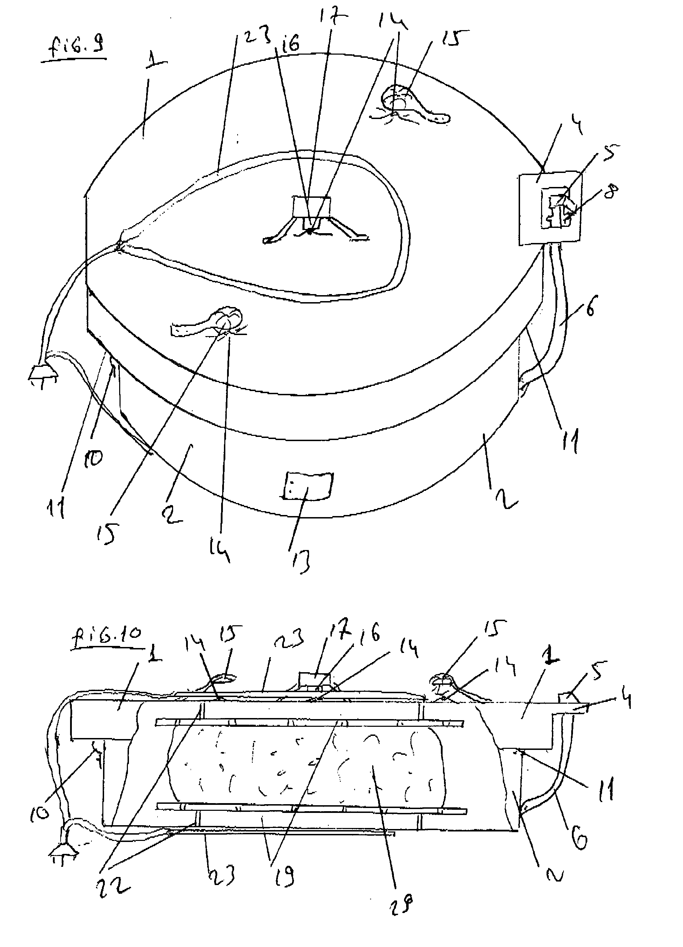

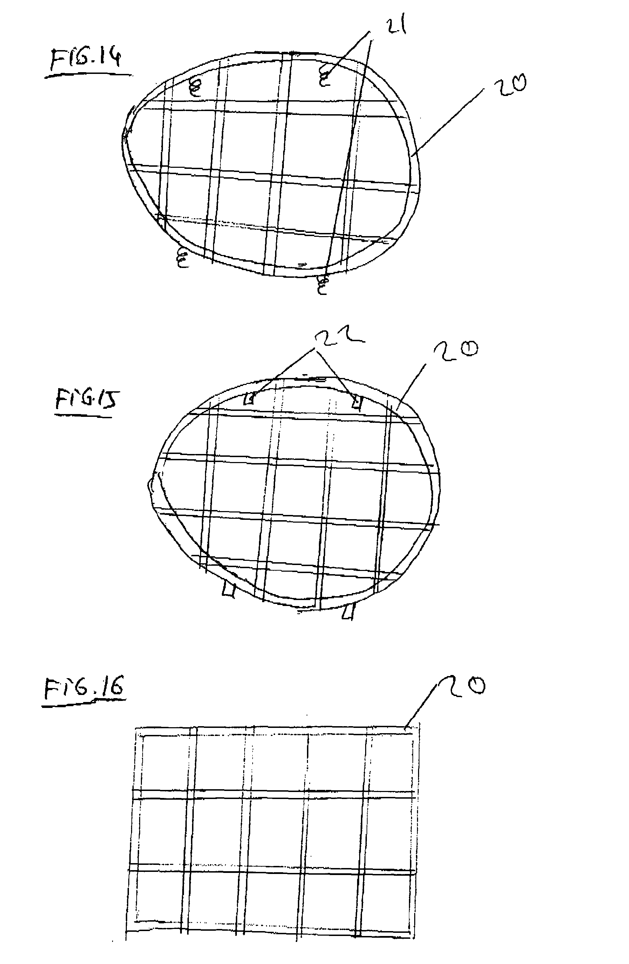

Fig.3 illustrates a wire rack (20) placed in the unit. A wire rack is constructed of crossed metal bars having forming frames and placed inside the unit which having well cooked lines on the food, either mounted or free to removable and on one or both side of the burger or steak of meat to dispatch the food from the inner surface of the unit to prevent burning in case the unit heats up too quickly. By means of the legs of the wire rack, fig. 15, also provides space between the burger(29) and the unit so the unit is holding more steam and the flavour. Fig.14 illustrates a stand alone a wire rack with spring legs(21) which is helical compression spring or any other. By means of the spring legs(21) in case a thick piece of steak of meat cooks it would not be squashed by the wire rack and it holds more steam and flavour within the food. Also a wire rack has solid legs(22) which provides certain amount within the unit, fig.10 and fig.15. And a wire rack in as shape that has no legs, fig.16, only the rack for a lesser space(19) and so that the food get close to the surface for a faster cook also prevents the food from sticking and also a wire rack in a shape that has solid legs(22) for a certain space. Also a wire depending on the shape of the invention can be round, oval, rectangular or any other geometric shape.

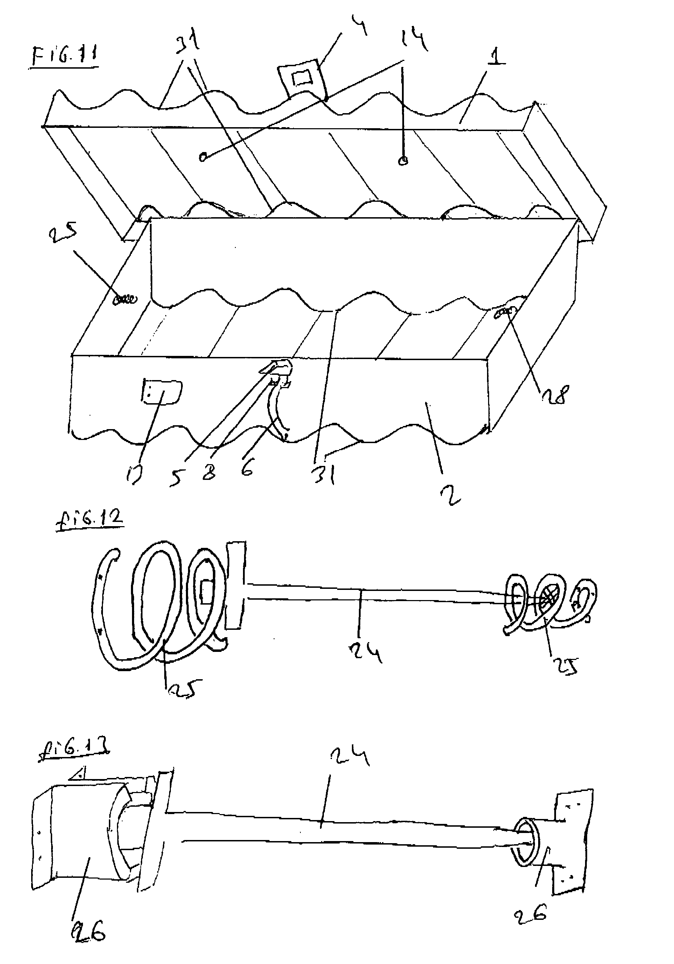

In fig.11 the unit is in a rectangular shape for the convenience of cooking meat steaks on the skewer (24). Fig.12 illustrates the skewer stands on the flexible skewer holder(25) which is constructed of number of springs which provides flexibility to the skewer in case steak of the meat touching more on one side of the unit and less on the other and not the skewer to be loose not the food to get burned on one side and cooks equally on both sides. Also the skewer holder can be solid skewer holder(26) and mounted inside the unit and it is holding the food in the middle of the unit enables the food not to touch the inside of the unit Also the base and the lid of the unit can be flat or waved. When the base and lid is flat without using a wire rack the food will cook even all over, when is waved the food will have well cooked lines also the waves(31) provides space(19) for steam. When it is desired the unit can also cook steaks of meat without the use of skewers. This can be achieved by simply placing the steak inside the unit.

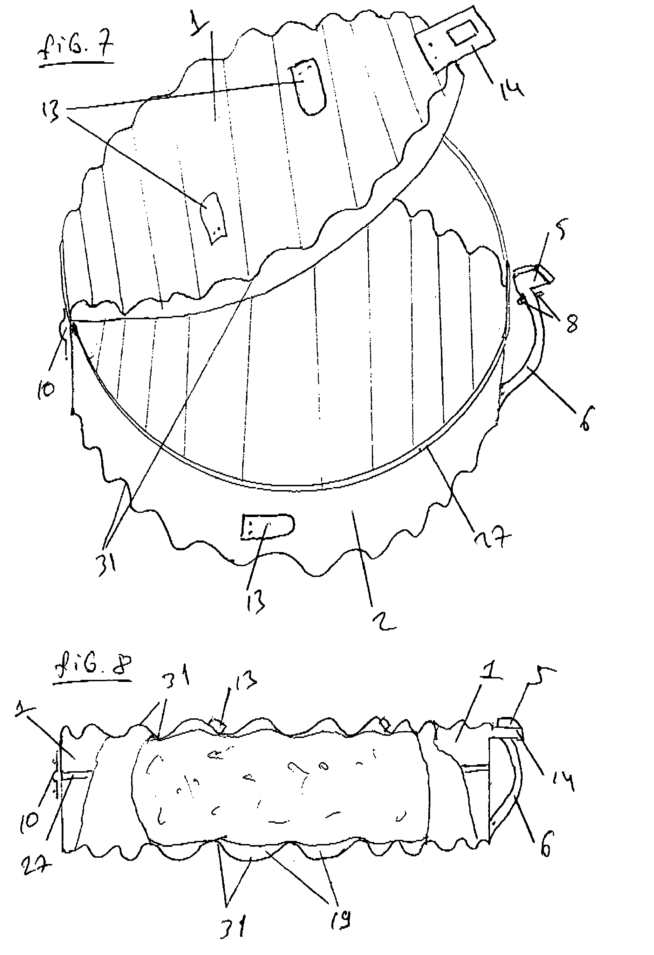

The upper lid and the base of the unit can be either flat, or waved, fig.7 and fig.8, also illustrates the base and the upper lid are waved by means of the waves(31) also provides gaps for steam and well cooked lines on the food. The unit is food-safe and non-stick material such as Teflon.

For economical production the invention can be in a shape that has dome lid and the dome base and well sealed to each other when is closed position and having steam release holes and steam flaps and locked by locking system. The unit in the shape that cooks simply by placing the steam release piston food in or the food can be on the skewer or the wire rack. As the burger or the steak of meat may get curved in the unit, wire racks are used on both sides of the unit which provides a space between the food and the inner surface of the unit for steamed flavour and keeps the food in condition.

The invention can also obtain the heat from electricity my means of the heating element (23) which is attached, fig.9 and fig.10. The shape the heating element is attached outer surface of the unit, the unit cooks slowly. And the shape that the unit is having heating elements inside the unit the food cooks faster and the element mounted that not to have contact with the food so that the food wouldn't get burned. The unit is made of metal or any other heat resistant materials. Depending on the thickness of the material the speed of the cooking varies.

Fig.21 illustrates steam umbrellas (15) which are shape of an umbrella mounted on the unit and standing above steam release holes (14). Steam umbrellas are protecting the danger of the steam(12) when jets out. The number and the size of the steam release holes which underneath the steam umbrellas are small enough to hold an amount of steam(12) within the unit. Steam umbrellas above the steam release ideally used in the shape that the unit obtain the heat from the heating elements also from the oven.

Preferably a thermometer can be built in to gauge the inner temperature of the unit when the probe of the thermometer is not touching the food but in the space. The thermometer can gauge the temperature of the food when the probe of the thermometer is touching the food and thermometer shows the cooking process. To know the correct temperature of the food the material of the thermometer of the body of thermometer is heat resistant material and heat transfers rate is the same as the heat transfers in the food.

Instead of the steam flaps there can be steam release pistons (16) fixed on the steam release holes, fig.22. Steam release piston is constructed of piston supporting spring (18) and the piston protective cover(17). The helical compression spring is inside the protective cover and it is associated to the steam release piston and it is compressed to hold steam release piston tight on the steam release hole to hold more steam and flavour within the unit. And the rate of the piston supporting spring(23) is smaller than beam spring frame (4) of the locking system. The rate of the piston supporting spring defines the amount of steam within the unit. Protective cover is protecting steam release piston in case there is a weight exerts on to the cover the weight will not affect steam release piston therefore the steam comes out steady. Preferably the unit also can be in the shape draw like which a wire holding the burger and slides into the unit and locks in.

Steam flaps. Steam umbrellas or steam pistons can be alone or combination of them in one unit.

The unit obtains heat by dropping into the hot oil, into the oven, keeping above a fire or having a heating elements associated.

The size and the number of the steam release holes defines the steam, kept within the unit, which derives from the food. Accordingly the amount of food within the unit compared to the size of the unit and the number of the steam release holes the amount of the steam varies. The unit can also be the size and the dimensions which enables a whole chicken or a fish fillet to be cooked. Accordingly the number and the size of the steam release holes and the rate of the steam flaps defines the amount of the steam within the unit. The unit in the shape that steam release holes are not blocked but opened for the release of the steam the unit is exposed to the oil to leak in. Although when the food starts heating up inside the unit, due to the constant heating of the food, a constant steam comes out from steam release holes. Therefore the oil does not leak in to the unit. Where the size and the number of the steam release holes and the amount of the steam derived from the food matters.
Fig.1, Illustrates the unit is closed and the diameter of the upper lid and the base are the same having steam flaps on to the steam release holes and the locking system and the invention is cooking without wire rack.
Fig.2 side view of fig.1 and is cut-out to show the inside of the invention and showing the burger(29) and the onions(28) placed inside the unit.
Fig.3, Illustrates the unit is half opened and the diameter of upper lid is bigger than the diameter of the base and the upper lid skirt (11) is to cover steam release holes (14) which are close to the lips of the base and the unit is to use with wire rack but no legs.
Fig.4 illustrates the side view of fig.3 and is cut-out to show inside the unit and showing the burger inside the unit.
Fig.5 illustrates the unit is having wire with spring legs. Fig.6 is the side view of fig.5 and is cut-out to show the inside of the unit and showing the burger inside the unit.
Fig 7. illustrates both side of the unit are waved.
Fig 8. illustrates the side view of the fig.7 and is cut-out showing the burger inside the unit.
Fig 9, illustrates the invention is closed position with a bigger diameter of upper lid having heating elements steam umbrellas above the steam release holes and locked by locking system.
Fig.10 illustrates the side vies of fig.9 is cut-out showing the burger inside the unit on the wire with solid legs(22).
Fig.11 Illustrates the unit is in a rectangular shape and waved lid and base to facilitate steak of meat to cook on the skewer.
fig.12, illustrates a sprigged skewer holder. Inside the spring hole is blocked gets support of tip of the skewer.
Fig.13, illustrates conventional fixed skewer holder.
Fig.14, illustrates a stand alone a wire rack with spring legs(21).
Fig 15, illustrates a stand alone wire rack with solid legs(22).
Fig.16 illustrates stand alone wire rack without legs.
Fig.17 illustrates a magnified locking system with beam spring frame.
Fig.18 illustrates slotted tongs.
Fig.19, is a magnifies locking system with a claw hook with beam bar.
Fig.20 is magnified view of steam flap on the steam release hole.
Fig 21 is magnified steam umbrella above the steam release hole and showing its not blocking steam release hole.
Fig.22 illustrates a magnified view of piston flap and is cut-out to show inside the cover and supporting spring is mounted with legs on the unit.

### Reference of drawings

- 1.: Upper lid
- 2.: Base
- 3.: Locking system
- 4.: Beam spring frame
- 5.: Slanted hook
- 6.: Beam bar
- 7.: Claw hook
- 8.: Unlocking sporting arm
- 9.: Slotted tongs
- 10.: Hinges
- 11.: Upper lid skirt
- 12.: Steam
- 13.: Steam flaps
- 14.: Steam release holes
- 15.: Steam umbrellas
- 16.: Steam release piston
- 17.: Piston protective cover
- 18.: Piston sporting Spring 19. Space
- 20.: Wire rack
- 21.: Spring legs
- 22.: Solid legs
- 23.: Heating elements
- 24.: Skewer
- 25.: Flexible skewer holder
- 26.: Solid skewer holder
- 27.: Rubber band
- 28.: Onions
- 29.: Burger
- 30.: Solid hook
- 31.: Waves

## Claims

1. A cooking disc unit, Fig.1, is preferably square, rectangular or round disc alike which confines the food in, such as burger, and isolates from the environment and holding the steam in by means of the steam flap which is attached to the unit and blocking the steam release holes which by means releasing the steam.

2. Steam release holes (14) according to claim 1, is one or more piercing or a slot, on the body of the unit and enables the pressure comes out from the unit.

3. Steam flaps(13) according to claim 1, in a cooking disc unit is one or more beam spring flap attached to the unit and blocking the steam release holes by means of beam spring it is flexible for pressure release.

4. A cooking disc unit in which a wire rack is a crossed bars look alike frames is placed inside the unit dispatches the burger steak of meat from inner surface of the unit.
